# EUROPÄISCHE PATENTSCHRIFT

(11) **EP 1 565 365 B1**
(45) Veröffentlichungstag und Bekanntmachung des Hinweises auf die Patenterteilung: **05.04.2006**
(21) Anmeldenummer: 03753415.3
(22) Anmeldetag: 15.09.2003
(51) Int. Cl.: B60T 10/02

(54) **ANTRIEBSEINHEIT MIT EINEM RETARDER**
DRIVE UNIT COMPRISING A RETARDER
UNITE D'ENTRAINEMENT PRESENTANT UN RALENTISSEUR

(30) Priorität: 13.09.2002 DE 10242736
(43) Veröffentlichungstag der Anmeldung: 24.08.2005
(73) Patentinhaber: Voith Turbo GmbH & Co. KG, 89522 Heidenheim (DE)
(72) Erfinder: VOGELSANG, Klaus, 74564 Crailsheim (DE); HEILINGER, Peter, 74589 Satteldorf (DE)
(74) Vertreter: Dr. Weitzel & Partner
(86) Internationale Anmeldenummer: PCT/EP2003/010249
(87) Internationale Veröffentlichungsnummer: WO 2004/026651

(56) Entgegenhaltungen:
- EP-A- 0 716 966
- EP-B- 0 885 351
- EP-B- 0 932 539
- WO-A-98/15725
- WO-A-98/35171
- US-A- 3 924 713
- US-B1- 6 223 718

## Beschreibung

Die Erfindung betrifft eine Antriebseinheit, im einzelnen mit den Merkmalen aus dem Oberbegriff des Anspruchs 1.

In Antriebsanlagen von Fahrzeugen oder stationären Anlagen ist als Mittel zur Geschwindigkeits- bzw. Drehzahlreduzierung häufig ein Retarder integriert. Der Retarder wird beim Einsatz im Kraftfahrzeug oder bei Anlagen mit stark wechselndem Betrieb durch Füllen und Entleeren des beschaufelten Arbeitskreislaufes mit einem Betriebsfluid ein- oder ausgeschaltet.

Die stationären oder fahrbareh Einheiten - beispielsweise Kraftfahrzeuge -, in welchen die genannten Antriebseinheiten eingebaut sind, haben in der Regel weitere Aggregate, die einer Kühlung bedürfen. Hierbei ist beispielsweise an Motoren, Bremsen, Kupplungen, Getriebe zu denken.

Diese anderen Aggregate können ebenfalls einen Kühlkreislauf aufweisen, um deren Arbeitsmedium zu kühlen.

Aus einer Vielzaht von Patenten sind Retarder bekannt geworden, bei denen das Arbeitsmedium des Retarders das Kühlmedium des Fahrzeuges ist. Diesbezüglich wird auf die
EP 0716 966 A1
WO 98/15725
EP 0 885 351 B1
EP 0 932 539 B1
verwiesen.

Nachteilig an den aus diesen Schriften bekannten Retardem ist deren hohe Verlustleistung im Nichtbremsbetrieb.

Das Dokument US-A-3 924 713, welches als repräsentativ für den nächst liegenden Stand der Technik angesehen werden kann, zeigt einen Retarder, bei welchem einen Einrichtung zum Absaugen des gasförmigen Volumens aus dem inneren des Retarderarbeitsraums vorgesehen ist, und damit der Retarder schneller befüllt und ein gewünschtes Bremsmoment schneller erreicht werden kann. Die aus diesem Dokument bekannten Merkmale sind im Oberbegriff von Anspruch 1 zusammengefasst.

Aufgabe der Erfindung ist es, die Verlustleistung in Antriebseinheiten mit derartigen Retardem zu minimieren.

Die Aufgabe wird durch eine Antriebseinheit mit den Merkmalen des Anspruchs 1 gelöst. In einer besonderen Ausgestaltung der Erfindung wird ein Zylinder zum Absaugen einer Restflüssigkeitsmenge des Arbeitsmediums im Nichtbremsbetrieb eingesetzt.

Die Verlustleistung kann noch weiter minimiert werden, wenn der Rotor und/oder Stator axial verschiebbar ausgelegt ist, so dass zwischen Rotor und Stator im Nichtbremsbetrieb ein großer Spalt ausgebildet wird. Eine derartige Lösung ist für einen mit Öl betriebenen Retarder in der WO 98/35171 beschrieben. Der Offenbarungsgehalt dieser Schrift wird vollumfänglich in die vorliegende Anmeldung mit einbezogen.

Weitere vorteilhafte Ausgestaltungen der Erfindung sind Gegenstand der Unteransprüche. Die Erfindung soll nachfolgend anhand der Figuren beschrieben werden.

Es zeigen:
- Figur 1: eine erste Ausführungsform der Erfindung;
- Figuren 2 und 3: eine zweite Ausführungsform der Erfindung;
- Figur 4: eine dritte Ausführungsform der Erfindung.

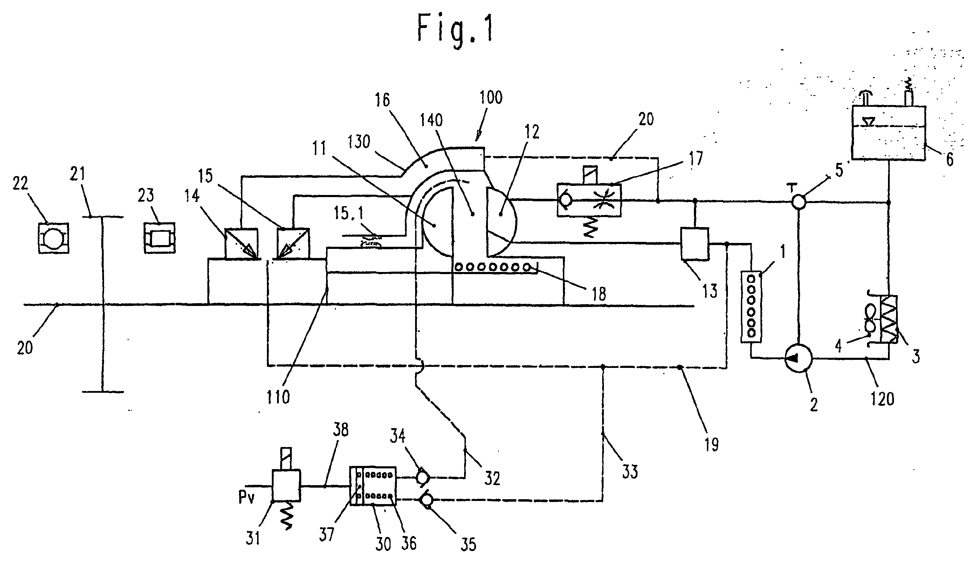

In der Figur 1 ist ein Sekundärretarder 100 gezeigt, der mit dem Kühlmedium des Fahrzeuges betrieben wird. Aus dem Kühlmedium wird Wärme mittels des Fahrzeugkühlers 3 und gegebenenfalls dem Lüfterrad 4 abgeführt, wobei mittels des Thermostates bestimmt wird, wieviel Kühlmedium durch den Kühler 3 geleitet wird und wieviel an diesem vorbeigeleitet wird. Der in Figur 1 gezeigte Retarder zeichnet sich durch eine geringe Verlustleistung aus.

Gemäß einer ersten Maßnahme ist das Rotorschaufelrad 11 axial verschiebbar auf der Rotorwelle 110 gelagert, so dass der Rotor 11 in eine Arbeitsposition nahe zum Stator 12 oder eine Ruheposition mit großem Abstand zum Stator 12 im Nichtbremsbetrieb verbracht werden kann. In Figur 1 ist der Retarder in Ruheposition gezeigt. Bezüglich der Verschiebbarkeit des Rotors wird auf die WO 98/35171 verwiesen.

Der in Figur 1 gezeigte Retarder umfasst einen Rotor 11, der auf einer, z. B. in einem Getriebe gelagerten schnell laufenden Welle 110, der sogenannten Retarderwelle, drehfest und fliegend gelagert ist. Die Welle 110 mit den Lagern 22 und 23 wird über ein Ritzel 21 von der - hier nicht dargestellten - Abtriebswelle eines Getriebes angetrieben. Der Rotor 11 ist auf der Welle 110 mittels einer nicht dargestellten Scbrägverzahnung längsbeweglich, so dass der Abstand zwischen Rotor und Stator eingestellt werden kann. Die Feder 18 verstellt den Rotor 11 im Nichtbremsbetrieb in die verlustarme, hier dargestellte, Position, d.h. zwischen Rotor und Stator 12 ergibt sich ein größtmöglicher Spalt. Der Retarder weist ein Retardergehäuse 130 mit einem Innenraum 16 auf, wobei der Innenraum 16 mit einem Kühlmedium gefüllt werden kann und dann als Kühlmantel fungiert. Der Raum zwischen Rotor 11 und Stator 12 wird als Arbeitsraum 140 bezeichnet und ist mit Arbeitsmedium befüllt. Der hydrodynamische Retarder ist in den Kühlkreislauf 120 des Kraftfahrzeuges integriert. Damit ist in der dargestellten Ausführungsform des Retarders das Arbeitsmedium des Retarders gleichzeitig das Kühlmedium des Kraftfahrzeuges. Um die Leerlaufverluste gering zu halten, muss im Nichtbremsbetrieb der Retarder entleert werden, wobei unter Entleerung auch eine Entleerung auf eine vorgegebene Restarbeitsmediummenge zu verstehen ist, welche vorteilhaft zu einer minimalen Verlustleistung führt.

Der Entleervorgang, der weitestgehend von der Pumpwirkung des Rotors 11 erzeugt wird, wird im wesentlichen durch das Regelventli 17 gesteuert, aber letztendlich durch den Überlagerungsdruck, der im Ausgleichsbehälter 6 des Fahrzeugkühlsystems durch ein Überdruckventil vorgegeben ist, behindert.

Aufgrund des Gegendrucks im Kühlkreislauf des Fahrzeuges weist der Retarder eine Restbefüllung auf, die entsprechend dem äußeren Gegendruck zu einer unerwünscht hohen Verlustleistung führt. Daher wird in der in der Figur 1 dargestellten ersten Ausführungsform der Erfindung zusätzlich zur Spaltvergrößerung zwischen Rotor 11 und Stator 12 im ungebremsten Zustand ein Teil der unvermeidbaren Restbefüllung aus dem Retarderkreislauf durch einen Zylinder 30 abgesaugt. Die abgesaugte Menge ist so groß bemessen, dass der Retarderkreislauf stets im Verlustleistungsminimum betrieben wird.

In dem in der Figur 1 gezeigten ersten Ausführungsbeispiel der Erfindung ist der Zylinder 30 über die Leitung 32 mit dem Retarderkreislauf und über die Leitung 33 mit dem Kühlwasserkreislauf, das heißt mit einem Teil des externen Kreislaufs, an welchen der interne Retarderkreislauf angeschlossen ist, verbunden. Zudem befindet sich in der Leitung 32 ein Rückschlagventil 34 und in der Leitung 33 ein Rückschlagventil 35. Der in Figur 1 dargestellte Zustand "Bremse-Aus", d. h. der Zustand des Nichtbremsbetriebes, wird über das Ventil 31 durch Entlüftung der Leitung 38 bewirkt. Der Kolben 37 im Zylinder 30 wird durch die Feder 36 in eine Position gebracht, in dem über die Leitung 32 und das Rückschlagventil 34 die notwendige Wassermenge aus dem Retarderkreislauf abgesaugt wird, um das gewünschte Verlustleistungsminimum zu erreichen. Dieser Vorgang wiederholt sich regelmäßig nach jedem Ausschalten des Retarders. Das Volumen des Zylinders 30 ist so bemessen, dass die störende Restflüssigkeitsmenge, die zu ungewollten Retarderverlusten im Nichtbremsbetrieb führt, sicher aufgenommen wird. Der Ausgleichsbehälter 6 ist so ausgestaltet, dass diese Restflüssigkeitsmenge nicht zu Störungen im Kühlsystem führt. Derartige Störungen sind prinzipiell möglich, da das Retardersystem aus dem geschlossenen Kühlwasserkreislauf des Kraftfahrzeuges Kühlmedium entnimmt und auch wieder abgibt, dabei kommt es zu unterschiedlichen Kühlwasserständen im Ausgleichsbehälter.

In der in der Figur 1 gezeigten Ausführungsform umfasst der hydrodynamische Retarder drei unterschiedliche Dichtungen. Eine ständig mit Kühlmittel umspülte Dichtung 14, die vorzugsweise eine Gleitringdichtung mit absoluter Dichtheit nach außen - hin zur Atmosphäre ist. Eine weitere Dichtung 15 hat in ihrer Dichtfunktion zwei Aufgaben zu erfüllen. Im Nichtbremsbetrieb wird die Kühlflüssigkeit, die über die Leitung 19 ständig den Innenraum 16 des Retardergehäuses als Kühlstrom durchfließen kann, absolut in Richtung Rotor und Stator abgedichtet, d. h. die Dichtung 15 übemimmt im Nichtbremsbetrieb die Dichtfunktion. Die Spaltringdichtung 15.1 wirkt im Bremsbetrieb als berührungsfreie Labyrinthdichtung und die Kühlflüssigkeit durchströmt die Dichtung 15, die in diesem Falle keine Dichtheit übemimmt. Dies kann beispielsweise dadurch erreicht werden, dass die Dichtung 15 derart ausgeführt ist, dass sie in Richtung vom Retarderinneren zur Umgebung (das heißt in der Richtung nach links in der Figur 1) um ein vorgegebenes Maß durchlässig und in Richtung von der Umgebung in das Retarderinnere (das heißt nach rechts in der Figur 1) dicht oder im wesentlichen dicht ausgeführt ist. Durch den Druckabfall über der Dichtung 15 im Bremsbetrieb ist gewährleistet, dass an der Dichtung 14 das Druckniveau des geschlossenen (externen) Kühlsystems anliegt.

Der Innenraum 16 ist so gestaltet, dass er als wärmeabführender Kühlmantel des Retarders funktioniert, in dem das kühlere Medium über die Leitung 19 zufließt und über die Leitung 20 abfließen kann.

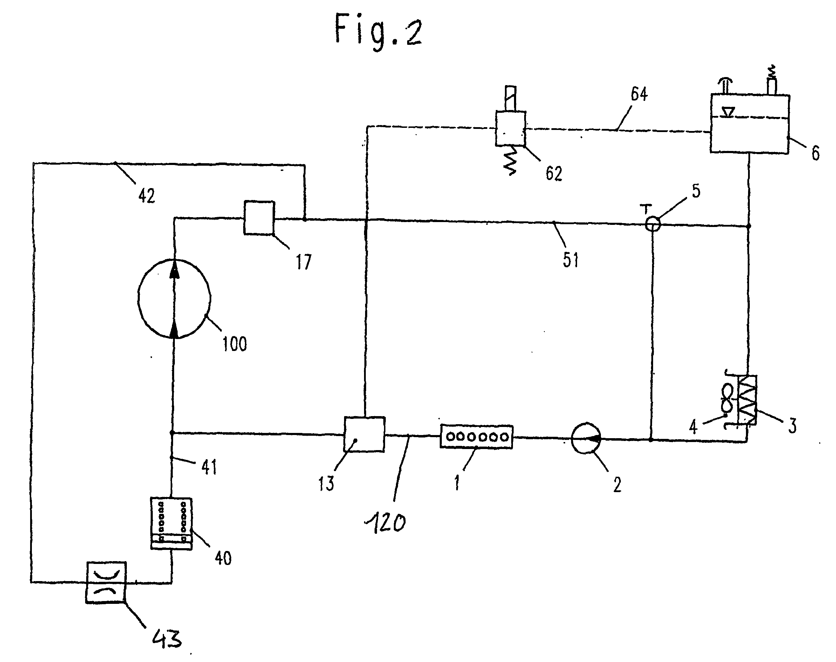

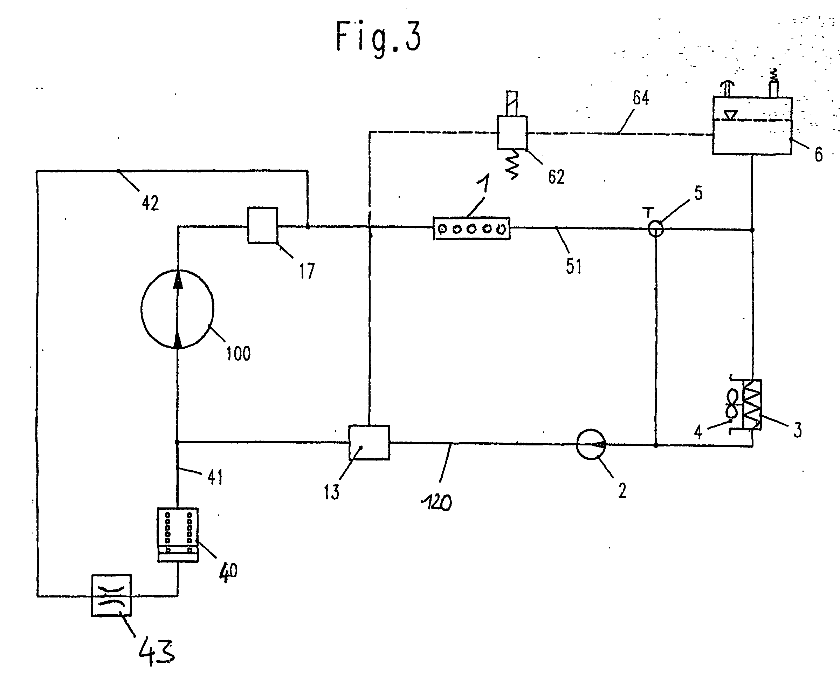

Die Figuren 2 und 3 zeigen alternative Ausgestaltungen der Erfindung, die sich dadurch auszeichnen, dass der mit einem Kolben und einer Feder ausgestattete Zylinder 40 so in das Retardersystem über die Leitungen 41 und 42 integriert ist, dass die Funktion "Restflüssigkeitsmenge absaugen" automatisch abläuft.

Im Nichtbremsbetrieb wird über die Leitung 41, die an einer Stelle niedrigen Druckes im Kühlkreistauf des Fahrzeuges angeschlossen ist, das heißt in Strömungsrichtung vor dem Arbeitsraum des Retarders, mittels des durch die Druckfeder druckbeaufschlagten Kolbens die Resttlüsslgkeitsmenge aus dem Retarder abgesaugt. Im Nichtbremsbetrieb überwindet nämlich die Druckfeder im Zylinder 40 den Druck in der Leitung 42, welcher im Nichtbremsbetrieb aufgrund des entleerten Retarders vergleichsweise niedrig ist.

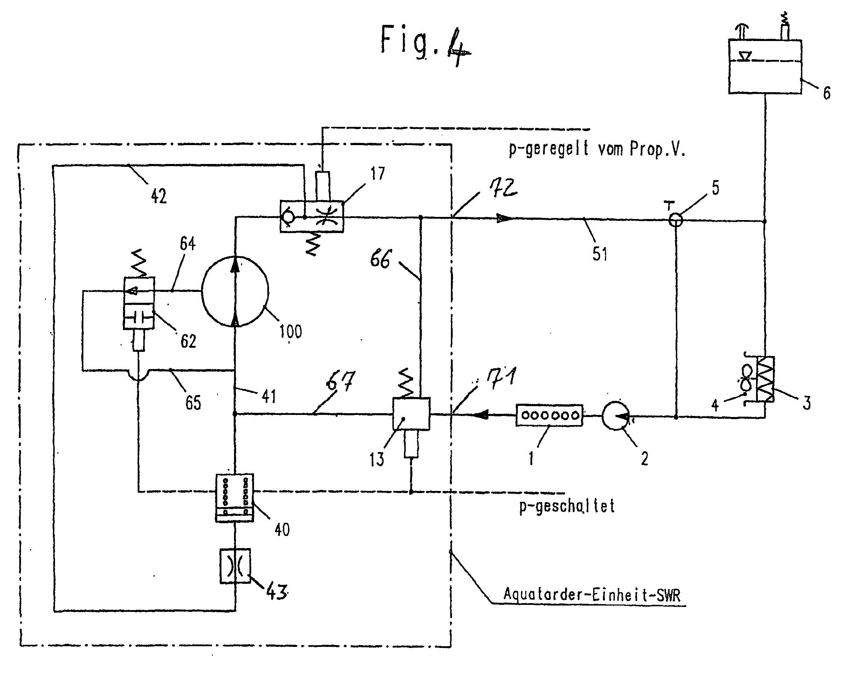

Zum Bremsbetrieb wird über die Pumpe 2 über das Umschaltventli 13 der Retarder 100 mit Kühlflüssigkeit angesteuert und gefüllt. In der Leitung 42, welche auf der der Druckfeder im Zylinder 40 entgegengesetzten Seite des Kolbens angeschlossen ist, herrscht nämlich jetzt - im Bremsbetrieb - ein hoher beziehungsweise höchster Druck, da die Leitung 42, wie man in der Figur 2 sehen kann, in Strömungsrichtung hinter dem Arbeitsraum des Retarders angeschlossen ist. Der Anschluß der Leitung 42 in Strömungsrichtung hinter dem Ventil 17 ist nur beispielhaft. Wie später mit Bezug auf die Figur 4 dargestellt wird, kann vorteilhaft der Anschluß auch innerhalb des Ventils 17, nämlich zwischen Rückschlagventil und Drossel, erfolgen. Der durch den Retarder erzeugte Druck wird somit über die Leitung 42 auf die der Druckfeder im Zylinder 40 entgegengesetzte Seite des Kolbens übertragen. Somit wird entgegen des Druckes der Federkraft der im Zylinder 40 angeordneten Feder die im Zylinder 40 befindliche Restflüssigkeitsmenge für den Bremsbetrieb wieder in den Retarderkreislauf beziehungsweise den Retarder automatisch zurückgeführt. Somit ist der Zylinder 40 für die nächste Ausschaltphase, d. h. den Nichtbremsbetrieb, wieder in der Lage, die Restflüssigkeitsmenge abzusaugen.

Die Ausführungsform gemäß der Figur 3 entspricht im wesentlichen der Ausführungsform gemäß der Figur 2. Gleiche Bauteile sind mit gleichen Bezugsziffern wie in der Figur 2 bezeichnet. Ein Unterschied liegt in der Anordnung des Retarderkreislaufs im Kühlmittelkreislauf 120 des Fahrzeugs. Bei zugeschaltetem Retarder ist nämlich in der Figur 3 der Abzweig des Kühlmittelkreislaufs mit dem Retarder 100 zwischen der Kühlmittelpumpe 2 und dem Motor 1 eingebunden. Bei der Figur 2 hingegen war dieser Kreislaufzweig im Kühlmittelkreislauf 120 hinter dem Motor 1 eingebunden. Wie bei der Ausführungsform gemäß Figur 2 ist ein auf Durchlass umschaltbares Druckabstellventil 62 vorgesehen sowie eine Druckentlastungsleitung 64, die mit dem Ausgleichsbehälter 6 verbunden ist. Das Druckabstellventil 62 ist in der Druckentlastungsleitung 64 angeordnet und wird beim Auftreten hoher Druckspitzen, beispielsweise einem Impulsschlag beim Entleeren des Retarders, geöffnet. Durch diese zusätzliche Maßnahme können beim Retarderbetrieb im Kühlkreislauf auftretende Druckspitzen abgebaut werden. Solche Druckspitzen treten insbesondere beim Zu- und Abschalten oder abrupten Lastwechseln des Retarders auf. Die Druckentlastungsleitung 64 ist direkt mit dem Ausgleichsbehälter 6 verbunden.

Die Figur 4 zeigt eine Weiterentwicklung der Erfindung. Das dargestellte Schaltschema zeigt Maßnahmen, die getroffen wurden, um beim Übergang vom Bremsbetrieb zum Nichtbremsbetrieb des Retarders 100 einen Druckstoß im System, insbesondere in der Leitung 51 weitgehend zu vermeiden. Ferner sind Maßnahmen dargestellt, welche zusätzlich oder alternativ ausgeführt sein können, um einen Druckstoß beziehungsweise stoßartigen Druckabfall beim Übergang vom Nichtbremsbetrieb in den Bremsbetrieb zu vermeiden.

Die erstgenannten Maßnahmen - Ausschaltstoßvermeidung - sind im wesentlichen durch das druckgeschaltete Ventil 62 mit den angeschlossenen Leitungen 64 und 65 verkörpert. Die Leitung 64 ist mit ihrem dem Ventil 62 abgewandten Ende in einer Hochdruckzone des Kühlkreislaufs angeordnet. Dies kann beispielsweise im Bereich des Arbeitsmediumauslasses des Retarders beziehungsweise an einem Entleerungskanal, welcher im Retardergehäuse ausgebildet ist, sein. Dort kann zum Beispiel zu Beginn des Nichtbremsbetriebs ein Druck von 11 bar herrschen. Eine weitere vorteilhafte Anschlussmöglichkeit ergibt sich mit der Position zwischen dem dargestellten Rückschlagventil und der einstellbaren Drossel im Regelventil 17. Dort kann beispielsweise ein Druck von 30 bar vorliegen.

Die Leitung 64 ist mit ihrem dem Ventil 62 abgewandten Ende in einer Niederdruckzone angeschlossen. Dort herrscht vorteilhaft ein Druck von maximal 2 bar. Der Anschluss kann beispielsweise im Bereich des Zulaufs des Retarders 100 vorgesehen sein, insbesondere an einem Füllkanal, der im Retarder ausgebildet ist.

Die Ansteuerung des Ventils 62 erfolgt vorteilhaft mit dem gleichen Schaltimpuls, der auch das Ventil 13 ansteuert. Beide Ventile werden insbesondere durch einen Druckstoß geschaltet (p-geschaltet). Beim Übergang vom Bremsbetrieb zum Nichtbremsbetrieb wird das Ventil 62 von einer geschlossenen Stellung in eine geöffnete Stellung geschaltet. Dadurch stellt sich eine Kurzschlussströmung über den Retarder 100 ein, das heißt Arbeitsmedium, vorliegend das Kühlmedium des Fahrzeugs, strömt aus der genannten Hochdruckzone über die Leitungen 64 und 65 in die genannte Niederdruckzone. Dadurch wird ein Ausstoß des gesamten Arbeitsmediums, welches im Bremsbetrieb durch den Retarder beziehungsweise die angeschlossenen Rohrleitungen aufgenommen war, verzögert in die Leitung 51 eingespeist, da durch die Kurzschlussströmung eine erhebliche Menge zunächst im Bereich des Retarders 100 zurückgehalten wird. Somit wird ein Druckstoß in der Leitung 51 vermieden. Der Kühlkreislaufbereich zwischen dem Ventil 13 und dem Ventil 17 über den Retarder 100 und die an diesen angeschlossenen Leitungen wird gleichmäßig entleert.

Die optimale Restmenge an Arbeitsmedium im Retarder im Nichtbremsbetrieb wird wiederum mittels des Zylinders 40 eingestellt. Wie man sieht, ist in diesem Ausführungsbeispiel der Zylinder 40 über die Leitung 42 mit einem Hochdruckbereich zwischen dem Rückschlagventil und der einstellbaren Drossel des Regelventils 17 verbunden. In die Leitung 42 ist eine Drossel 43 geschaltet, so dass beim Übergang vom Nichtbremsbetrieb zum Bremsbetrieb die zur Verlustleistungsminderung abgesaugte Flüssigkeitsmenge aus dem Zylinder 40 kontrolliert in das druckbelastete Leitungssystem über die Leitung 41 zurückgeführt wird.

Um eine optimale, das heißt möglichst geringe Verlustleistung im Nichtbremsbetrieb zu erreichen, ist vorteilhaft das Regelventil 17 derart ausgeführt, dass es im Nichtbremsbetrieb den Kühlkreislauf des Fahrzeugs (beginnend mit Leitung 51) im Nichtbremsbetrieb vollständig gegenüber dem Leitungszweig mit dem Retarder 100 abdichtet. Gleiches gilt für das Ventil 13, welches vorteilhaft ebenfalls im Nichtbremsbetrieb den Kühlkreislauf des Fahrzeugs (beginnend mit dem Leitungszweig, in welchem der Motor 1 dargestellt ist) gegenüber dem Leitungsbereich, in welchem der Retarder 100 angeordnet ist, vollständig abdichtet. Das Ventil 13 ist im Nichtbremsbetrieb zudem derart geschaltet, dass die gesamte ankommende Kühlmittelmenge über die Leitung 66 in die Leitung 51 geleitet wird.

Um einen Einschaltstoß zu vermeiden, wie oben angedeutet, kann das Ventil 13 beim Übergang vom Nichtbremsbetrieb zum Bremsbetrieb des Retarders in eine Zwischenstellung geschaltet werden, so dass zunächst nur ein Teil des Kühlmediums über die Leitung 67 zum Retarder 100 geleitet wird, während ein anderer Teil weiterhin über die Leitung 66 zur Leitung 51 geleitet wird und damit im Fahrzeugkühlkreislauf verbleibt, ohne durch den Retarder geleitet worden zu sein.

Wie in der Figur 4 ferner durch die strichpunktierte Linie angedeutet ist, können vorgegebene einzelne Bauteile zu einer Wasserretardereinheit 70 integriert werden. Diese erfindungsgemäß ausgebildete Wasserretardereinheit 70 umfasst in einer Ausführungsform den Retarder 100 und ein Mittel zur Entleerung einer Restflüssigkeitsmenge gegen den vom Kühlsystem, an welches die Wasserretardereinheit 70 angeschlossen ist, aufgebauten äußeren Druck. In einer besonderen Ausführung ist dieses Mittel zur Entleerung der dargestellte Zylinder 40, insbesondere zusammen mit der Drossel 43, dem Regelventil 17 und dem Umschaltventil 13. In einer besonders vorteilhaften Ausführung umfasst die Wasserretardereinheit 70 ferner die Druckentlastungsleitungen 64 und 65 mit dem dazwischen geschalteten Druckabstellventil 62. Selbstverständlich sind vorteilhaft an der Wasserretardereinheit 70 Anschlussstellen zur Drucksteuerung beziehungsweise Druckregelung vorgesehen, zum Beispiel zur Druckschaltung des Ventils 13 und zur Druckregelung des Ventils 17. Auch die übrigen von der strichpunktierten Linie umschlossenen Leitungen sind vorteilhaft in der Wasserretardereinheit 70 integriert, so dass diese als flexibel einsetzbares Standardbauteil an einen Kühlmittelkreislauf eines Kraftfahrzeugs angeschlossen werden kann, wobei die Wasserretardereinheit 70 insbesondere mit genau einem Anschluss 71 zum Zuführen von Kühlmedium und einem einzigen Anschluss 72 zum Abführen von Kühlmedium versehen ist.

Durch die vorliegende Erfindung wird erstmals ein Antriebssystem angegeben, bei dem der Retarder in den Kühlmittelkreislauf des Fahrzeuges integriert ist und eine Verlustleistungsminimierung durch gezielte Entleerung des Retarders im Nichtbremsbetrieb auf eine vorgegebene Restflüssigkeitsmenge erreicht wird. Ferner kann durch die weiteren dargelegten Maßnahmen das Auftreten von Druckstößen im System wirkungsvoll verhindert werden.

### Bezugszeichenliste

- 1: Motor
- 2: Pumpe
- 3: Kühler
- 4: Lüfterrad
- 5: Thermostat
- 6: Ausgleichsbehälter
- 11: Rotor
- 12: Stator
- 13: Umschaltventil
- 14: Dichtung
- 15: Dichtung
- 15.1: Spaltringdichtung
- 16: Innenraum
- 17: Regelventil
- 18: Feder
- 19: Leitung
- 20: Leitung
- 21: Ritzel
- 22, 23: Lager
- 30: Zylinder
- 31: Ventil
- 32, 33: Leitung
- 34, 35: Rückschlagventil
- 36: Feder
- 37: Kolben
- 38: Leitung
- 40: Zylinder
- 41, 42: Leitung
- 43: Drossel
- 62: Druckabstellventil
- 64: Druckenttastungsteitung
- 65: Druckentlastungsleitung
- 66: Leitung
- 67: Leitung
- 70: Wasserretardereinheit
- 71, 72: Kühlmediumanschluss
- 100: Retarder
- 110: Welle
- 120: Kühlkreislauf
- 130: Retardergehäuse
- 140: Arbeitsraum

## Patentansprüche

1. Antriebseinheit, insbesondere eines Fahrzeugs, mit einem Kühlkreislauf, umfassend
1.1 einen hydrodynamischen Retarder (100) mit einem Rotorschaufelrad (11) und einem Statorschaufelrad (12), wobei
1.2 der hydrodynamische Retarder (100) im Kühlkreislauf angeordnet ist und das Arbeitsmedium des Retarders (100) das Kühlmedium ist,
**dadurch gekennzeichnet, dass**
1.3 der Retarder (100) Mittel zur Entleerung einer Restflüssigkeitsmenge im Nichtbremsbetrieb gegen den vom Kühlsystem aufgebauten äußeren Druck umfasst.

2. Antriebseinheit gemäß Anspruch 1, **dadurch gekennzeichnet, dass** die Mittel zur Entleerung Mittel zum Absaugen der Restflüssigkeitsmenge aus dem Retarder sind.

3. Antriebseinheit gemäß Anspruch 1 oder 2, **dadurch gekennzeichnet, dass** die Mittel zur Entleerung mindestens einen Zylinder (30, 40) umfassen, der mit dem Kühlkreislauf (120) und/oder dem Retarder (100) über Leitungen (32, 33, 41, 42) verbunden ist.

4. Antriebseinheit nach Anspruch 3, **dadurch gekennzeichnet, dass** der Zylinder (30, 40) über eine Leitung (32, 42) an die Stelle höchsten Druckes im Kühlsystem (120) angeschlossen ist.

5. Antriebseinheit nach Anspruch 4, **dadurch gekennzeichnet, dass** in der Leitung (32, 42) vom Zylinder (30, 40) zur Stelle des höchsten Druckes eine Drossel (43), insbesondere eine regelbare Drossel, angeordnet ist.

6. Antriebseinheit gemäß einem der Ansprüche 1 bis 3, **dadurch gekennzeichnet, dass** die Mittel zur Entleerung des weiteren ein schaltbares Ventil (31) umfassen.

7. Antriebseinheit gemäß einem der Ansprüche 3 bis 6, **dadurch gekennzeichnet, dass** der Zylinder über eine Leitung (41) mit dem Kühlkreislauf (120) an die Stelle niedersten Druckes im Kühlkreislauf angeschlossen ist.

8. Antriebseinheit gemäß der Ansprüche 7 und 4, **dadurch gekennzeichnet, dass** die Leitung (42), weicfie an die Stelle höchsten Druckes im Kühlsystem (120) angeschlossen ist, und die Leitung (41), welche an die Stelle des niedersten Druckes im Kühlkreislauf (120) angeschlossen ist, auf entgegengesetzten Seiten eines Kolbens (37) am Zylinder (40) angeschlossen sind und dass der Kolben (37) von einer Druckfeder (36) druckbeaufschlagt wird, die den Kolben (37) entgegen des durch die Leitung (41) zugeführten Druckes drückt.

9. Antriebseinheit gemäß einem der Ansprüche 1 bis 7, **dadurch gekennzeichnet, dass** eine Druckentlastungsleitung (64, 65) mit einem Druckabstellventit (62) am Kühlkreislauf (120) und/oder dem Retarder (100) angeschlossen ist, wobei das Druckabstellventil (62) derart gesteuert in die Driackentlastungsleitung (64, 65) eingebracht ist, dass es beim Übergang des Retarders vom Bremsbetrieb zum Nichtbremsbetrieb öffnet.

10. Antriebseinheit gemäß Anspruch 9, **dadurch gekennzeichnet, dass** die Druckentlastungsleitung (65, 65) an einem Ende an einer Stelle niedrigen Druckes in Strömungsrichtung im Bremsbetrieb vor dem Retarder (100) angeschlossen ist und mit ihrem anderen Ende an einer Stelle hohen Druckes am Retarder (100) oder hinter dem Retarder (100), wobei der Druck an der Stelle niedrigen Druckes insbesondere maximal 2 bar beträgt und der Druck an der Stelle hohen Druckes insbesondere zwischen 11 bar und 30 bar.

11. Antriebseinheit gemäß einem der Ansprüche 1 bis 10, **dadurch gekennzeichnet, dass** die Antriebseinheit einen Motor (1) und ein Getriebe aufweist und der Retarder (100) ein Sekundärretarder ist, der in Kraftflussrichtung hinter dem Getriebe angeordnet ist.

12. Antriebseinheit gemäß einem der Ansprüche 1 bis 11, **dadurch gekennzeichnet, dass** die Mittel zur Entleerung der Restflüssigkeitsmenge einen Zylinder (40) umfassen, der einen Kolben (37) aufweist, der auf einer Seite durch eine Leitung (42), die in Strömungsrichtung hinter dem Retarder (100) an einer Stelle hohen Drucks in der Retarderbaueinheit im Kühlkreislauf angeschlossen ist, mit einem ersten hohen Druck beaufschlagt wird und auf seiner entgegengesetzten Seite mittels einer Leitung (41), die in Strömungsrichtung vor dem Retarder an einer Stelle niedrigen Druckes in der Retarderbaueinheit am Kühlkreislauf angeschlossen ist, mit einem zweiten niedrigen Druck.

13. Antriebseinheit gemäß Anspruch 12, **dadurch gekennzeichnet, dass** in die Leitung (42) eine Drossel (43) geschaltet ist.

14. Antriebseinheit gemäß einem der Ansprüche 11 bis 13, **dadurch gekennzeichnet, dass** die Retarderbaueinheit ferner ein Druckabstellventil (62) in einer Druckentlastungsleitung (64, 65) aufweist, wobei die Druckentlastungsleitung (64, 65) an einem Ende in Strömungsrichtung hinter dem Retarder oder am Retarder (100) an einer Stelle hohen Druckes angeschlossen ist und an ihrem anderen Ende in Strömungsrichtung vor dem Retarder (100) an einer Steiie niedrigen Druckes des Kühlkreislaufs.

15. Antriebseinheit gemäß der Ansprüche 13 und 14, **dadurch gekennzeichnet, dass** die Leitung (42) an ihrem dem Zylinder (40) entgegengesetzten Ende an einem Regelventil (17) angeschlossen ist, und dass die Antriebseinheit ferner ein Umschaltventil (13) in Strömungsrichtung hinter einem Anschluss (71) zum Zuführen von Kühlmedium in den Retarder und vor dem Retarder (100) aufweist, das derart ausgebildet ist, dass es in vorgegebenen Schaltstellungen Kühlmedium durch den Retarder (100) oder durch einen Bypass (66) um den Retarder herumleitet, und **dadurch**, dass das Regelventil (17), das Druckabstellventil (62) und das Umschaltventil (13) durch Druckbeaufschlagung geschaltet oder geregelt werden.

16. Antriebseinheit gemäß einem der Ansprüche 11 bis 15, **dadurch gekennzeichnet, dass** der Retarder (100) einen einzigen Anschluss (71) zum Zuführen von Kühlmedium und einen einzigen Anschluss (72) zum Abführen von Kühlrnediurn aufweist

17. Antriebseinheit gemäß einem der Ansprüche 15 oder 16, **dadurch gekennzeichnet, dass** das Regeiventit (17) und das Umschaltventil (13) in den vorgegebenen Schaltstellungen, in welchen das Kühlmedium durch den Bypass (66) um den Retarder herumgeleitet wird, in Richtung des Retarders vollständig dicht ausgeführt sind.

## Claims

1. A drive unit, especially a vehicle, with a vehicle cooling circulation, comprising:
1.1 a hydrodynamic retarder (100) with a rotor blade wheel (11) and a stator blade wheel (12),
1.2 with the hydrodynamic retarder (100) being arranged in the cooling circulation and the working medium of the retarder (100) being the cooling medium, **characterized in that**
1.3 the retarder (100) comprises means for discharging a residual amount of liquid in non-braking operation against the external pressure built up by the cooling system.

2. A drive unit according to claim 1, **characterized in that** the means for discharging are means for drawing off the residual amount of liquid from the retarder.

3. A drive unit according to claim 1 or 2, **characterized in that** the means for discharging comprise at least one cylinder (30, 40) which is connected with the cooling circulation (120) and/or the retarder (100) via lines (32, 33, 41, 42).

4. A drive unit according to claim 3, **characterized in that** the cylinder (30, 40) is connected via a line (32, 42) to the point of highest pressure in the cooling system (120).

5. A drive unit according to claim 4, **characterized in that** a throttle (43), especially a controllable throttle, is arranged in the line (32, 42) from the cylinder (30, 40) to the point of highest pressure.

6. A drive unit according to one of the claims 1 to 3, **characterized in that** the means for discharging further comprise a switchable valve (31).

7. A drive unit according to one of the claims 3 to 6, **characterized in that** the cylinder is connected via a line (41) with the cooling circulation (120) at the point of lowest pressure in the cooling circulation.

8. A drive unit according to claims 7 and 4, **characterized in that** the line (42) which is connected to the point of highest pressure in the cooling system (120) and the line (41) which is connected to the point of lowest pressure in the cooling circulation (120) are connected to the cylinder (40) at opposite sides of a piston (37) and that the piston (37) is pressurized by a pressure spring (36) which presses the piston (37) against the pressure supplied through line (41).

9. A drive unit according to one of the claims 1 to 7, **characterized in that** a pressure relief line (64, 65) is connected to the cooling circulation (120) and/or the retarder (100) by a pressure-cut-off valve (62), with the pressure cut-off valve (62) being introduced into the pressure relief line (64, 65) in a controlled manner in such a way that it will open during the transition of the retarder from braking operation to non-braking operation.

10. A drive unit according to claim 9, **characterized in that** the pressure relief line (64, 65) is connected in braking operation at one end before the retarder (100) at a point of low pressure in the direction of flow and with its other end to the retarder (100) or behind the retarder (100) at a point of high pressure, with the pressure at the point of low pressure being especially 2 bars at most and the pressure at the point of high pressure being especially between 11 bars and 30 bars.

11. A drive unit according to one of the claims 1 to 10, **characterized in that** the drive unit comprises an engine (1) and a transmission, and the retarder (100) is a secondary retarder which is arranged behind the transmission in the direction of force flow.

12. A drive unit according to one of the claims 1 to 11, **characterized in that** the means for discharging a residual amount of liquid comprise a cylinder (40) having a piston (37) which is pressurized with a first high pressure on one side by a line (42) which is connected in the cooling circulation to a point of high pressure in the retarder module behind the retarder (100) in the direction of flow and is pressurized with a second low pressure on its opposite side by means of a line (41) which is connected in the cooling circulation in the direction of flow before the retarder to a point of low pressure in the retarder module.

13. A drive unit according to claim 12, **characterized in that** a throttle (43) is switched in the line (42).

14. A drive unit according to one of the claims 11 to 13, **characterized in that** the retarder module further comprises a pressure cut-off valve (62) in a pressure relief line (64, 65), with the pressure relief line (64, 65) being connected at one end in the direction of flow behind the retarder or to the retarder (100) at a point of high pressure and at its other end in the direction of flow before the retarder (100) at a point of low pressure of the cooling circulation.

15. A drive unit according to claims 13 and 14, **characterized in that** the line (42) is connected at its end opposite of the cylinder (40) to a control valve (17), and that the drive unit further comprises a changeover valve (13) in the direction of flow behind the connection (71) for supplying cooling medium into the retarder and before the retarder (100), which valve is configured in such a way that in predetermined switching positions it guides cooling medium through the retarder (100) or around the retarder through a by-pass (66), and that the control valve (17), the pressure cut-off valve (62) and the changeover valve (13) are switched or controlled by pressurization.

16. A drive unit according to one of the claims 11 to 15, **characterized in that** the retarder (100) comprises a single connection (71) for supplying cooling medium and a single connection (72) for removing cooling medium.

17. A drive unit according to one of the claims 15 or 16, **characterized in that** the control valve (17) and the changeover valve (13), in the predetermined switching positions in which the cooling medium is guided by the by-pass (66) around the retarder, are provided in the direction of the retarder with a fully sealed configuration.

## Revendications

1. Unité de propulsion, en particulier d'un véhicule, avec un circuit de refroidissement, comprenant :
1.1 un retardateur hydrodynamique (100) avec une roue à aubes de rotor (11) et une roue à aubes de stator (12), dans lequel
1.2 le retardateur hydrodynamique (100) est disposé dans le circuit de refroidissement et le fluide de travail du retardateur hydrodynamique (100) est le fluide de refroidissement,
**caractérisée en ce que**
1.3 le retardateur (100) comprend des moyens pour vidanger une quantité résiduelle de liquide en fonctionnement sans freinage à l'encontre de la pression extérieure constituée par le système de refroidissement.

2. Unité de propulsion selon la revendication 1, **caractérisée en ce que** les moyens pour la vidange sont des moyens pour aspirer la quantité résiduelle de liquide hors du retardateur.

3. Unité de propulsion selon la revendication 1 ou 2, **caractérisée en ce que** les moyens pour la vidange comprennent au moins un cylindre (30, 40) qui communique avec le circuit de refroidissement (120) et/ou le retardateur (100) par des conduites (32, 33, 41, 42).

4. Unité de propulsion selon la revendication 3, **caractérisée en ce que** le cylindre (30, 40) est raccordé par une conduite (32, 42) au point de plus forte pression du circuit de refroidissement (120).

5. Unité de propulsion selon la revendication 4, **caractérisée en ce qu'**il est prévu dans la conduite (32, 42) allant du cylindre (30, 40) au point de plus forte pression un restricteur (43), en particulier un restricteur réglable.

6. Unité de propulsion selon l'une quelconque des revendications 1 à 3, **caractérisée en ce que** les moyens pour la vidange comprennent en outre une valve (31) commutable.

7. Unité de propulsion selon l'une quelconque des revendications 3 à 6, **caractérisée en ce que** le cylindre est raccordé par une conduite (41) au circuit de refroidissement (120) au point de plus faible pression du circuit de refroidissement.

8. Unité de propulsion selon les revendications 7 et 4, **caractérisée en ce que** la conduite (42) raccordée au point de plus forte pression du circuit de refroidissement (120) et la conduite (41) raccordée au point de plus faible pression du circuit de refroidissement (120) sont raccordées au cylindre (40) sur des côtés opposés d'un piston (37) et **en ce que** le piston (37) est contraint par un ressort de compression (36) qui pousse le piston (37) contre la pression amenée par la conduite (41).

9. Unité de propulsion selon l'une quelconque des revendications 1 à 7, **caractérisée en ce qu'**une conduite de réduction de la pression (64, 65) avec une valve de dépressurisation (62) est raccordée au circuit de refroidissement (120) et/ou au retardateur (100), la valve de dépressurisation (62) étant introduite dans la conduite de réduction de la pression (64, 65) et régulée de telle sorte qu'elle s'ouvre lorsque le retardateur passe du fonctionnement en mode de freinage au fonctionnement sans freinage.

10. Unité de propulsion selon la revendication 9, **caractérisée en ce que** la conduite de réduction de la pression (64, 65) est raccordée à une extrémité en un point de faible pression en amont du retardateur (100) dans le sens d'écoulement en mode de freinage et à son autre extrémité en un point de forte pression sur le retardateur (100) ou en aval du retardateur (100), la pression au point de faible pression étant en particulier de 2 bars au maximum et la pression au point de forte pression étant en particulier comprise entre 11 bars et 30 bars.

11. Unité de propulsion selon l'une quelconque des revendications 1 à 10, **caractérisée en ce que** l'unité de propulsion est un moteur (1) et possède un engrenage et le retardateur (100) est un retardateur secondaire disposé en aval de l'engrenage dans le sens d'écoulement de la force.

12. Unité de propulsion selon l'une quelconque des revendications 1 à 11, **caractérisée en ce que** les moyens pour la vidange de la quantité résiduelle de liquide comprennent un cylindre (40) présentant un piston (37) qui est soumis d'un côté à une première pression élevée par une conduite (42) raccordée au circuit de refroidissement en aval du retardateur (100) en un point de forte pression dans l'unité de retardateur, et à une seconde pression plus basse de son côté opposé par une conduite (41) raccordée au circuit de refroidissement en amont du retardateur en un point de faible pression dans l'ensemble de retardateur.

13. Unité de propulsion selon la revendication 12, **caractérisée en ce qu'**un restricteur (43) est monté dans la conduite (42).

14. Unité de propulsion selon l'une quelconque des revendications 11 à 13, **caractérisée en ce que** l'ensemble de retardateur contient en outre une valve de dépressurisation (62) dans une conduite de réduction de la pression (64, 65), laquelle conduite de réduction de la pression (64, 65) est raccordée à une extrémité en aval du retardateur dans le sens d'écoulement ou sur le retardateur (100) en un point de forte pression et à l'autre extrémité en amont du retardateur (100) dans le sens d'écoulement en un point de faible pression du circuit de refroidissement.

15. Unité de propulsion selon les revendications 13 et 14, **caractérisée en ce que** la conduite (42) est raccordée à son extrémité opposée au cylindre (40) à une valve de régulation (17), et **en ce que** l'unité de propulsion comprend en outre une valve de commutation (13) en aval dans le sens d'écoulement d'un raccord (71) pour amener du fluide de refroidissement dans le retardateur ou avant le retardateur (100), qui est conformée de telle manière qu'elle fait passer le fluide de refroidissement à travers le retardateur (100) ou par une dérivation (66) contoumant le retardateur dans des positions de commutation prédéterminées, et **en ce que** la valve de régulation (17), la valve de dépressurisation (62) et la valve de commutation (13) sont commutées ou régulées par l'application d'une pression.

16. Unité de propulsion selon l'une quelconque des revendications 11 à 15, **caractérisée en ce que** le retardateur (100) possède un seul raccord (71) pour l'arrivée du fluide de refroidissement et un seul raccord (72) pour l'évacuation du fluide de refroidissement.

17. Unité de propulsion selon l'une quelconque des revendications 15 ou 16, **caractérisée en ce que** la valve de régulation (17) et la valve de commutation (13) sont conçues de façon à être entièrement étanches vis-à-vis du retardateur dans les positions de commutation prédéterminées dans lesquelles le fluide de refroidissement contourne le retardateur dans la dérivation (66).
